# FASCICULE DE BREVET EUROPEEN

(11) **EP 1 365 188 B1**
(45) Date de publication et mention de la délivrance du brevet: **03.10.2007**
(21) Numéro de dépôt: 03370021.2
(22) Date de dépôt: 20.05.2003
(51) Int. Cl.: F16P 1/02, B65G 33/24

(54) **Trappe de visite sécurisée**
Gesicherte Revisionsabdeckung
Safety inspection hatch

(30) Priorité: 23.05.2002 FR 0206306
(43) Date de publication de la demande: 26.11.2003
(73) Titulaire: Skako Couvrot, Société Anonyme, 59910 Bondues (FR)
(72) Inventeur: Noel, Nicolas, 59910 Bondues (FR)
(74) Mandataire: Duthoit, Michel Georges André

(56) Documents cités:
- FR-A- 2 756 611
- GB-A- 533 714
- GB-A- 995 677
- GB-A- 2 013 815
- US-A- 3 724 505
- US-A- 5 427 836

## Description

La présente invention a trait à une machine présentant un compartiment interne comprenant un organe, notamment moteur, et comprenant une trappe de visite qui permet l'accès audit organe de la machine par l'intermédiaire de l'ouverture de trappe.

Bien que plus particulièrement prévue pour l'inspection d'un organe moteur, tel que notamment un transporteur rotatif à vis, ou vis d'Archimède, la présente invention pourra être utilisée dans tous les cas où il s'avère nécessaire de pouvoir accéder à une machine en fonctionnement ou à l'arrêt, pour pouvoir l'inspecter, et cela dans des conditions de sécurité suffisantes.

En particulier, la trappe de visite pourra être installée sur la machine, par exemple la paroi d'un conduit ou d'un compartiment à l'intérieur duquel se trouve l'organe à inspecter et notamment ses éléments mobiles de transmission ou concourrant au travail.

On connaît dans l'état de la technique différents types de trappe de visite.

En particulier, certaines trappes de visite comprennent un palonnier à vis qui prend appui sur des griffes de positionnement prévues sur le pourtour de la trappe. Une plaque est placée à l'aplomb de l'ouverture de la trappe. Il est alors possible de fermer de manière étanche la trappe de visite par le jeu d'une poussée de la vis contre la plaque, contrebalancée par une contre-poussée du palonnier sur les griffes d'accrochage. Un outil est généralement nécessaire à la manoeuvre de la vis.

Cependant, il est régulièrement nécessaire d'accéder à la machine afin de l'inspecter. Il suffit alors de démonter la trappe. Mais dans ce cas, la sécurité des intervenants n'est plus respectée.

Une première solution consiste en l'utilisation de capteurs au niveau de la trappe, empêchant le fonctionnement de la machine lorsque la trappe est ouverte.

Cependant, dans le cas de transporteur rotatif à vis et notamment pour le transport de matières pulvérulentes, telles du ciment, il arrive que des agglomérats viennent bloquer ou gêner le fonctionnement de la machine. Ces agglomérats peuvent être dus à la condensation d'eau à l'intérieur du transporteur.

Il faut alors pouvoir accéder à l'intérieur de la machine en cours de fonctionnement pour pouvoir la débloquer.

Ainsi, une trappe telle que précédemment décrite d'une part ne remplit pas les conditions de sécurité imposées par les normes NF EN 292-2 (sécurité des machines - principes et spécifications techniques) et NF EN 294 (distance de sécurité) et d'autre part ne permet pas d'inspecter la machine en cours de fonctionnement.

On connaît du document FR-2.756.611 un dispositif de sécurité pour une machine mobile, du type moto pompe, comprenant une trémie et une vis de gavage.

Ladite machine est amenée devant une cuve fixe contenant des produits destinés à être déversés dans la trémie de la machine. L'ouverture de la trémie est située en dessous de l'ouverture de la cuve, cette dernière pouvant être fermée par une porte étanche. Le dispositif de sécurité est constitué par un cache incliné grillagé prenant appui sur la paroi verticale de la cuve, et l'ouverture de la trémie.

Toutefois, la structure du dispositif décrit dans le document FR-2.756.611 ne permet pas de résoudre le problème posé par la présente invention.

Le but de l'invention est donc de proposer une trappe de visite qui pallie les inconvénients précités.

En particulier, un but de l'invention est de proposer une trappe de visite munie de moyens de protection, dont la trappe peut être ôtée sans toutefois devoir démonter les moyens de protection. De plus, si tous les moyens de protection sont démontables, ils ne doivent pas l'être facilement. Enfin, il ne doit pas être possible de remonter la trappe si les moyens de protection sont absents.

Un premier but de l'invention est de proposer une trappe de visite offrant un niveau de sécurité suffisant pour permettre l'inspection de la machine, notamment en fonctionnement.

Un autre but de l'invention est de fournir une trappe de visite robuste et facile à mettre en oeuvre.

Il sera également important de pouvoir adapter facilement la trappe de visite selon l'invention aux machines disposant déjà de trappes de visite mais présentant un niveau de sécurité inférieur.

Un dernier but de l'invention est de proposer un procédé pour adapter les trappes de visite selon l'invention aux dispositifs déjà existants.

D'autres buts et avantages de l'invention apparaîtront au cours de la description qui va suivre, qui n'est donnée qu'à titre indicatif et qui n'a pas pour but de la limiter.

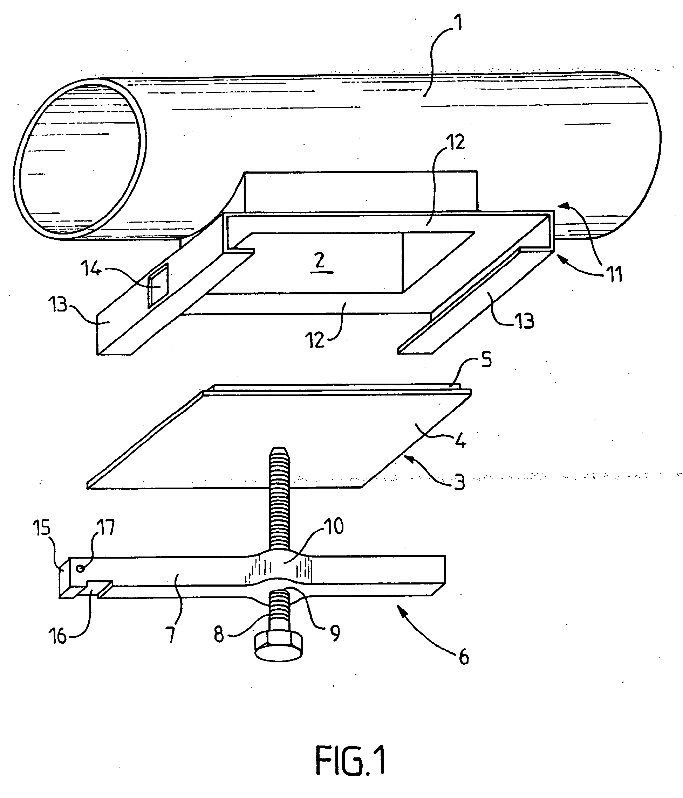

L'invention concerne une machine qui est bien comme, voir figure 1 de la demande présente, et qui présente un compartiment interne, comprenant un organe, notamment moteur, et comprenant une trappe de visite, qui permet l'accès audit organe de la machine par l'intermédiaire de l'ouverture de ladite trappe pour l'inspection de l'organe, ladite trappe comportant des moyens de fermeture de ladite ouverture de trappe, des moyens de commande desdits moyens de fermeture et des moyens de positionnement sur l'ouverture de trappe.

La machine selon l'invention est munie de moyens de protection opérant par rapport à ladite ouverture de trappe pour autoriser l'accès visuel à ladite machine afin de l'inspecter en fonctionnement ou à l'arrêt, tout en déportant l'accès manuel à ladite machine d'une distance de sécurité D afin d'interdire à un opérateur d'insérer un de ses membres au niveau de l'ouverture de trappe.

La présente invention a également trait à un procédé pour améliorer la sécurité d'une trappe de visite apte à donner accès à une machine, notamment pour l'inspection d'un organe moteur, ladite trappe de visite présentant une ouverture de trappe, une plaque amovible pour la fermeture de la trappe, un palonnier à vis prenant appui sur des moyens de positionnement dont deux griffes de positionnement parallèles, ledit palonnier à vis permettant d'exercer une poussée sur la trappe amovible afin de fermer la trappe de manière étanche et une contre-poussée au niveau desdites griffes, voir figure 1 de la demande présente.

Le procédé est caractérisé par les étapes successives suivantes :
- on retire la plaque et le palonnier à vis,
- on découpe une des griffes de positionnement de façon à n'en laisser qu'une lèvre,
- on installe des moyens de protection sur ladite ouverture de trappe, lesdits moyens de protection coopérant avec lesdits moyens de positionnement et autorisant l'accès visuel à ladite machine afin de l'inspecter en fonctionnement ou à l'arrêt, tout en déportant l'accès manuel à ladite machine d'une distance de sécurité D afin d'interdire à un opérateur d'insérer un de ses membres au niveau de l'ouverture de trappe.

L'invention sera mieux comprise à la lecture de la description qui va suivre, accompagnée des dessins en annexe, parmi lesquels :
- la figure 1 représente une vue en perspective, de dessous, d'une trappe selon l'état de la technique,
- la figure 2 est une vue externe d'une trappe de visite selon l'invention,
- la figure 3 est une vue externe selon une direction III perpendiculaire à la direction d'observations de la figure 2, d'une trappe de visite selon l'invention,
- la figure 4 est une vue en coupe de la trappe de visite selon l'invention selon le plan IV-IV,
- la figure 5 est une vue en coupe de la trappe de visite selon l'invention, selon un plan V-V,
- la figure 6 donne un exemple d'une première étape du procédé selon l'invention,
- les figures 7a, 7b et 7c sont des vues schématiques selon le même plan de coupe V-V représentant les différents niveaux de sécurité de la trappe selon l'invention.

L'invention concerne une machine présentant un compartiment interne comprenant un organe, notamment moteur, et comprenant une trappe de visite, qui permet l'accès audit organe de la machine par l'intermédiaire de l'ouverture de ladite trappe pour l'inspection de l'organe, ladite trappe comportant des moyens de fermeture de ladite ouverture de trappe, des moyens de commande desdits moyens de fermeture et des moyens de positionnement par rapport à l'ouverture de trappe, caractérisée en ce que la trappe de visite est munie de moyens de protection opérant par rapport à l'ouverture de trappe pour autoriser l'accès visuel à ladite machine afin de l'inspecter en fonctionnement ou à l'arrêt, tout en déportant l'accès manuel à la dite machine d'une distance de sécurité D afin d'interdire à un opérateur d'insérer un de ses membres dans l'ouverture de trappe,

Comme illustré à la figure 1, on connaît déjà des trappes aptes à donner accès à une machine, telle qu'un transporteur rotatif à vis dans un conduit 1. Une telle trappe présente une ouverture de trappe 2 qui peut être fermée à l'aide de moyens de fermeture 3 de l'ouverture de trappe 2.

Ces moyens de fermeture de trappe se présenteront notamment sous la forme d'une plaque 4 munie d'un joint d'étanchéité 5.

Une telle trappe de visite peut également comporter des moyens de commande 6 desdits moyens de fermeture 3. Il s'agira notamment d'un palonnier 7 à vis 8. La tige de la vis 8 peut se visser au niveau d'un orifice traversant 9 prévu dans un renflement 10 du palonnier, sensiblement au milieu du palonnier.

Les moyens de commande permettent de maintenir les moyens de fermeture en place et de les manoeuvrer lorsqu'on veut par exemple ouvrir la trappe de visite pour procéder à une inspection

Enfin, une telle trappe de visite pourra comporter des moyens de positionnement 11 par rapport à l'ouverture de trappe 2. Ces moyens de positionnement 11 sont constitués d'une part, de lèvres longitudinales 12 orientées extérieurement par rapport à l'ouverture de trappe 2, dans le plan de l'ouverture de trappe 2 et d'autre part, de griffes de positionnement 13 avec un profil en L, rattachées aux lèvres 12.

Les griffes de positionnement 13 peuvent présenter un évidement 14 destiné à coopérer avec une extrémité 15 du palonnier.

L'extrémité 15 du palonnier peut ainsi dépasser de la griffe de positionnement 13 au niveau de l'orifice 14. Il peut être utile de prévoir à cette extrémité un rétrécissement 16 du palonnier qui pourra alors former butée au niveau de l'orifice 14.

Il est également intéressant de prévoir dans la partie de l'extrémité 15 dépassant de la griffe 13 un orifice traversant 17 pour y placer un cadenas par exemple.

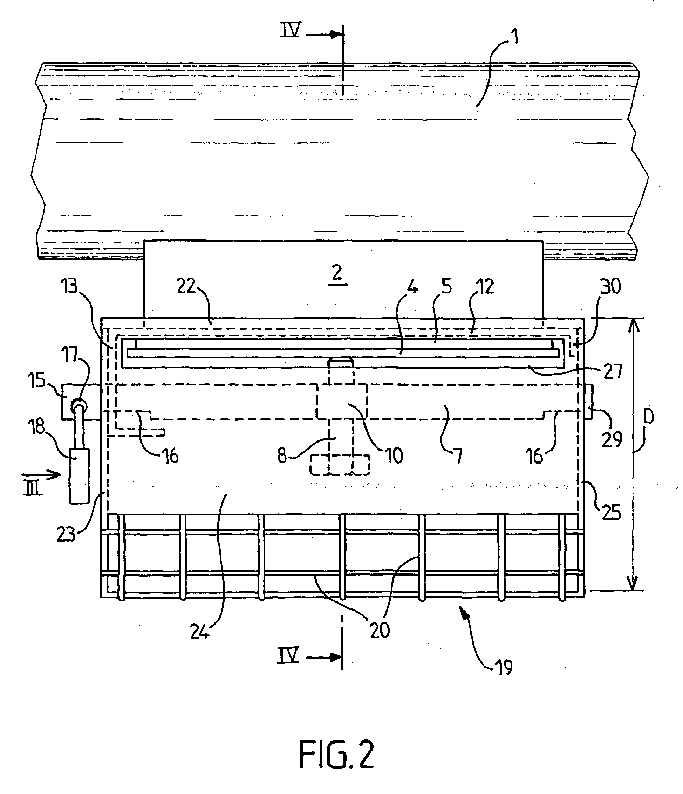

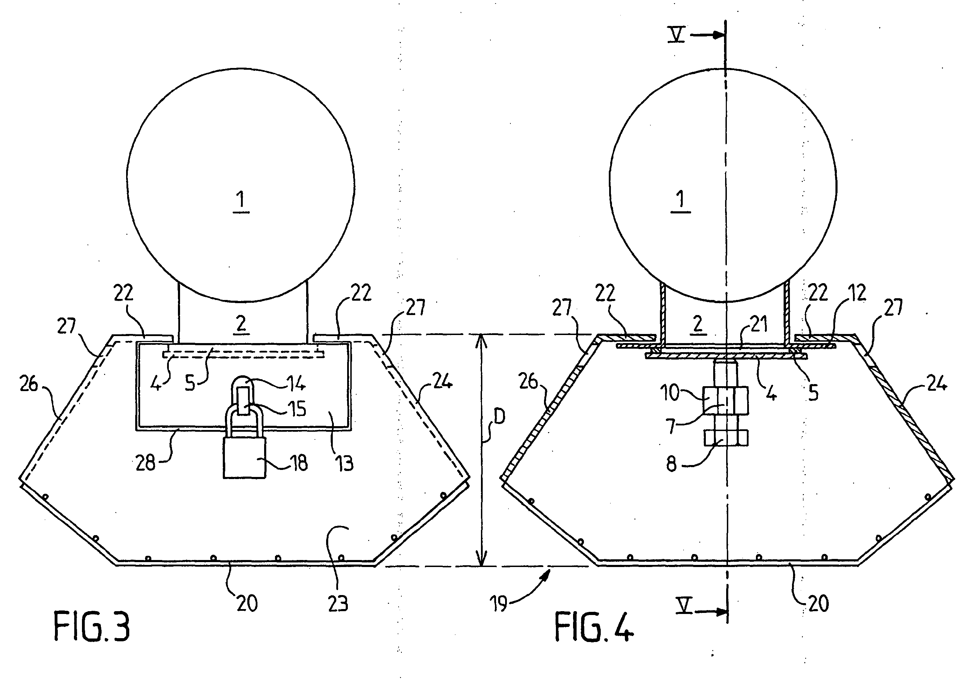

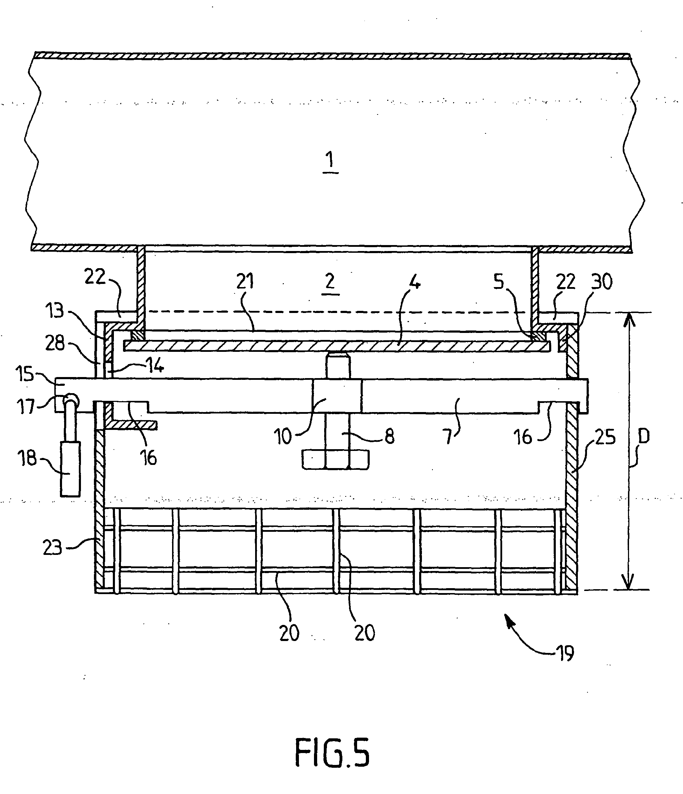

En référence aux figures 2 à 5, la trappe de visite de la machine conforme à l'invention est munie de moyens de protection 19 opérant par rapport à l'ouverture de trappe 2. Les figures 2 et 3 montrent des vues externes, selon des directions perpendiculaires, de la trappe de visite.

Les moyens de protection 19 se présentent sous la forme d'un caisson avec un fond 20 au moins en partie grillagé, une ouverture 21 en regard dudit fond 20, les lèvres 22 de ladite ouverture 21 coopérant avec lesdits moyens de positionnement 11. L'ouverture 21 du caisson est située à une distance de sécurité D du fond 20 du caisson. Enfin, le caisson comporte des faces latérales 23, 24, 25, 26 entre le fond 20 et l'ouverture 21 du caisson.

Les faces latérales 23-26 peuvent bien entendu être planes ou être constituées de plusieurs facettes planes. Dans ce dernier cas, le caisson 19 n'a plus la forme générale d'un cube ou d'un pavé mais d'un polyèdre.

Selon une mise en oeuvre particulière de l'invention, les moyens de fermeture 3 se présentent sous la forme d'une plaque amovible 4 munie d'un joint d'étanchéité 5.

Dans ce cas, il peut être avantageux de prévoir sur l'une ou les deux faces latérales 24, 26 une fente 27 au voisinage de l'ouverture 21 du caisson pour insérer et retirer les moyens de fermeture 3.

Les moyens de commande 6 des moyens de fermeture 3 peuvent se présenter sous la forme d'un palonnier 7 à vis 8.

Dans ce cas, les moyens de positionnement 11 et en particulier les lèvres longitudinales 12 se trouvent prises entre les lèvres 22 de l'ouverture 21 du caisson et les moyens de fermeture 3 lorsque le caisson est installé.

Bien entendu, les moyens de protection 19 peuvent être assujettis de façon amovible à l'ouverture de trappe 2, au niveau desdits moyens de positionnement 11.

Cette dernière caractéristique est particulièrement avantageuse dans le cas où l'on a adapté la trappe de visite selon l'invention à une trappe pré-existante.

Selon une autre caractéristique avantageuse de l'invention, une première face latérale 23 du caisson présente un évidement 28 dans la continuité de l'ouverture 21 du caisson. Une extrémité libre 15 du palonnier dépasse du caisson au niveau dudit évidement 28, l'autre extrémité 29 du palonnier 7 étant fixée au caisson.

Toujours selon la même mise en oeuvre, les moyens de positionnement 11 comprennent une griffe de positionnement 13 complémentaire de l'évidement 28 et coopérant au niveau d'un orifice traversant 14 avec l'extrémité 15 du palonnier 7.

Enfin, l'extrémité 15 du palonnier 7 est munie d'un orifice traversant 17 dans lequel on peut faire passer un cadenas 18 pour assujettir le caisson à la trappe de façon amovible.

La coopération entre la griffe 13 et l'évidement 28 permet d'une part de positionner le caisson autour de la trappe de façon amovible eet d'autre part, de reconstituer une face pleine.

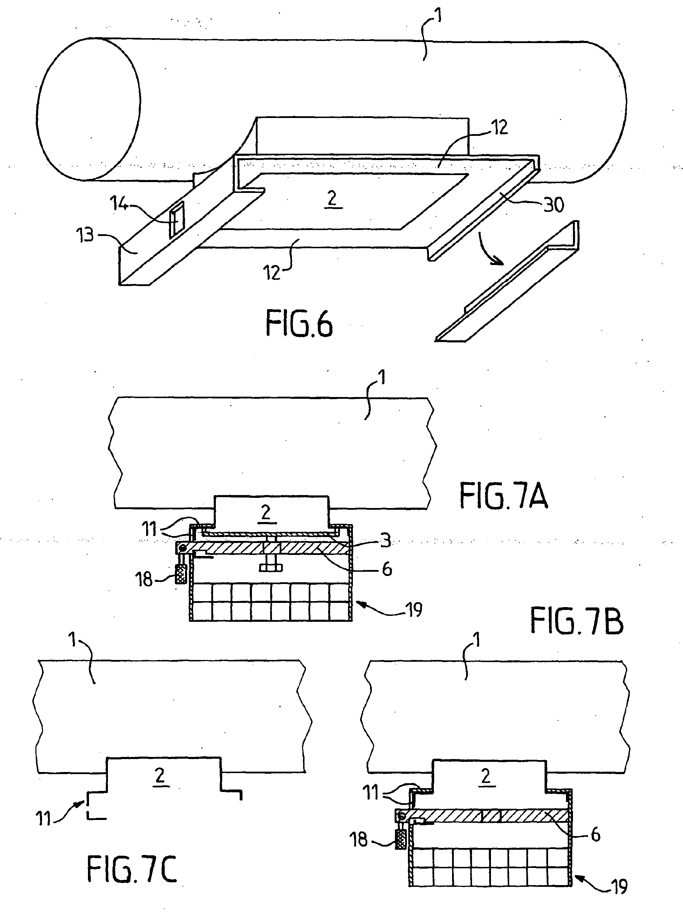

En se référant aux figures 7a, 7b et 7c, on peut voir les différents niveaux de sécurité obtenus grâce à la trappe de visite conforme à l'invention.

La figure 7c illustre un niveau minimal de sécurité dans lequel les moyens de fermeture 3 et les moyens de protection 19 sont absents.

Selon une variante de l'invention, il peut être avantageux de prévoir des moyens pour empêcher le fonctionnement de la machine lorsque la trappe de visite est à ce niveau minimal de sécurité. Il s'agira notamment de capteur de la présence ou non du moyen de protection 19.

Sur la figure 7a, le niveau de sécurité maximum est illustré. Dans ce cas, le moyen de protection 19 est installé au niveau de la trappe de visite et il est verrouillé à l'aide du cadenas 18. Le moyen de fermeture 3 de l'ouverture de trappe 2 est également installé à l'intérieur du moyen de protection 19. Cette figure illustre la situation en fonctionnement normal de la machine.

Sur la figure 7b, est illustré un niveau de sécurité intermédiaire dans lequel les moyens de fermeture 3 de l'ouverture de trappe 2 sont absents. Pour ce faire, il a suffit de dévisser la vis 8 du palonnier 7 puis d'ôter les moyens de fermeture 3 en les faisant glisser par la fente 27.

On peut remarquer que munir le palonnier 7 d'un cadenas 18 constitue une sécurité supplémentaire. Cela permet en particulier de contrôler qui souhaite ôter le caisson 19 de la trappe de visite et à quel moment.

Du fait de la présence de grillage sur le fond 20 du moyen de protection 19, il est possible d'avoir un accès visuel à la machine afin de l'inspecter en fonctionnement ou à l'arrêt, l'accès manuel à la dite machine étant interdit par le moyen de protection 19.

Le fond grillagé 20 n'empêche cependant pas d'insérer un outil ou un bâton afin de débloquer la machine pendant l'inspection.

Enfin, si le moyen de protection 19 est absent, il n'est plus possible de remonter la trappe de visite.

La présente invention a également trait à un procédé pour améliorer la sécurité d'une trappe de visite apte à donner accès à une machine notamment pour l'inspection d'un organe moteur, ladite trappe de visite présentant une ouverture de trappe, une plaque amovible pour la fermeture de la trappe, un palonnier à vis prenant appui sur des moyens de positionnement dont deux griffes de positionnement parallèles, ledit palonnier à vis permettant d'exercer une poussée sur la plaque amovible afin de fermer la trappe de manière étanche et une contre-poussée au niveau desdites griffes.

En une première étape, on retire la plaque et le palonnier à vis. Puis, comme illustré à la figure 6, on découpe une des griffes du positionnement 13 de façon à n'en laisser qu'une lèvre 30.

Les moyens de positionnement sont donc alors constitués d'une griffe 13 restante munie d'un orifice traversant 14 en son milieu, de deux lèvres longitudinales 12 orientées extérieurement, dans le plan de l'ouverture de trappe 2 et d'une lèvre 30 correspondant à la griffe de positionnement coupée.

On installe ensuite un moyen de protection 19 sur ladite ouverture de trappe 2, lesdits moyens de protection coopérant avec lesdits moyens de positionnement 11.

Les moyens de protection autorisent un accès visuel à ladite machine afin de l'inspecter en fonctionnement ou à l'arrêt tout en déportant l'accès manuel à ladite machine d'une distance de sécurité D afin d'interdire à un opérateur d'insérer un de ses membres dans l'ouverture de trappe.

Les moyens de protection peuvent se présenter sous la forme d'un caisson, une première face latérale 23 du caisson présentant un évidement 28 complémentaire de la griffe de positionnement 13 restante et avec laquelle ledit évidement 28 coopère pour reconstituer une face pleine.

Selon une mise en oeuvre particulière du procédé, le caisson installé comporte un fond 20 au moins en partie grillagée et une ouverture 21 en regard dudit fond, destinée à coopérer avec l'ouverture de trappe.

Le caisson comporte également des moyens de fermeture 3 de l'ouverture de trappe 2 et des moyens de commande 6 desdits moyens de fermeture 3.

Les moyens de commande 6 desdits moyens de fermeture 3 se présentent sous la forme d'un palonnier 7 à vis 8 que l'on fixe au caisson par une extrémité 29. L'autre extrémité 15 du palonnier 7 est libre et dépasse du caisson au niveau dudit évidement 28. Cette extrémité 15 coopère avec la griffe de positionnement 13 pour assujettir le caisson à la trappe de façon amovible.

Ainsi un caisson tel que décrit constitue un moyen de protection et permet d'améliorer la sécurité d'une trappe de visite.

Pour l'installer, il faut glisser le caisson autour de lèvres longitudinales 12 orientées extérieurement, en engageant le caisson au niveau de l'évidement 28, et en le glissant de la lèvre de la griffe coupée 30 à la griffe de positionnement 13.

Lorsque le caisson est entièrement engagé, la lèvre de la griffe coupée 30 forme une butée au niveau de la face 25 du caisson. De plus, l'extrémité libre 15 du palonnier est engagée au niveau de l'orifice traversant 14 prévu sur la griffe de positionnement 13 et l'ensemble griffe de positionnement 13 et face 23 présentant un évidement 28 permet de reconstituer une face pleine.

Il est alors possible de cadenasser le caisson à la trappe de visite au niveau de l'extrémité libre 15 du palonnier. On atteint ainsi le niveau de sécurité intermédiaire tel qu'illustré à la figure 7b.

Pour atteindre le niveau de sécurité maximale tel qu'illustré à la figure 7a, il faut insérer la plaque 4 dans la fente 27 prévue sur les faces latérales 24 et/ou 26 puis serrer la vis 8, ce qui permettra par un jeu de poussée et de contre-poussée de fermer l'ouverture de trappe 2 de manière étanche.

Il peut être intéressant de prévoir que la plaque 4 présentera un bombement au niveau du point de contact entre la plaque 4 et la vis 8 pour positionner facilement ladite vis 8.

## Revendications

1. Machine présentant un compartiment interne comprenant un organe, notamment moteur, et comprenant une trappe de visite, qui permet l'accès audit organe de la machine par l'intermédiaire de l'ouverture de ladite trappe pour l'inspection de l'organe, ladite trappe de visite comportant des moyens de fermeture (3) de ladite ouverture de trappe, des moyens de commande (6) desdits moyens de fermeture et des moyens de positionnement (11) sur l'ouverture (2) de trappe, **caractérisée en ce que** la trappe de visite est munie de moyens de protection (19) opérant par rapport à ladite ouverture de trappe (2) pour autoriser l'accès visuel à ladite machine afin de l'inspecter en fonctionnement ou à l'arrêt, tout en déportant l'accès manuel à ladite machine d'une distance de sécurité D afin d'interdire à un opérateur d'insérer un de ses membres au niveau de l'ouverture de trappe.

2. Machine selon la revendication 1, dans laquelle lesdits moyens de protection sont assujettis de façon amovible à l'ouverture de trappe, au niveau desdits moyens de positionnement (11).

3. Machine selon la revendication 1 ou 2, dans laquelle lesdits moyens de protection se présentent sous la forme d'un caisson avec un fond (20) au moins en partie grillagé, une ouverture (21) en regard dudit fond, dont la périphérie (22) coopère au moins en partie avec lesdits moyens de positionnement (11), ladite ouverture (21) du caisson étant située à une distance de sécurité D du fond du caisson, ledit caisson comportant en outre des faces latérales (23-26) reliant le fond (20) et l'ouverture (21) du caisson.

4. Machine selon l'une des revendications 1, 2 ou 3, dans laquelle les moyens de fermeture (3) se présentent sous la forme d'une plaque amovible (4) munie d'un joint d'étanchéité (5) et dans laquelle les moyens de commande sont constitués d'un palonnier(7) à vis (8), lesdits moyens de positionnement (11) se trouvant pris entre les lèvres (22) de l'ouverture du caisson et lesdits moyens de fermeture (3).

5. Machine selon la revendication 4, dans laquelle :
- une première face latérale (23) du caisson présente un évidement (28) dans la continuité de l'ouverture (21) du caisson,
- une extrémité libre (15) du palonnier (7) dépasse du caisson au niveau dudit évidemment (28), l'autre extrémité (16) étant fixée au caisson,
- les moyens de positionnement (11) comprennent une griffe (13) complémentaire dudit évidement (28) pour reconstituer une face pleine, coopérant avec l'extrémité libre (15) du palonnier (7) pour positionner et assujettir le caisson à la trappe de façon amovible.

6. Machine selon la revendication 4, dans laquelle au moins une seconde face latérale (24, 26) du caisson de protection présente une fente (27) au voisinage de l'ouverture (21) du caisson pour insérer et retirer lesdits moyens de fermeture (3).

7. Procédé pour améliorer la sécurité d'une trappe de visite apte à donner accès à une machine, notamment pour l'inspection d'un organe moteur, ladite trappe de visite présentant une ouverture de trappe (2), une plaque amovible (4) pour la fermeture de la trappe, un palonnier (7) à vis (8) prenant appui sur des moyens de positionnement (11) dont deux griffes de positionnement (13) parallèles, ledit palonnier à vis permettant d'exercer une poussée sur la plaque amovible afin de fermer la trappe de manière étanche et une contre-poussée au niveau desdites griffes, **caractérisé en ce que** :
- on retire la plaque et le palonnier à vis,
- on découpe une des griffes de positionnement (13) de façon à n'en laisser qu'une lèvre (30),
- on installe des moyens de protection (19) sur ladite ouverture de trappe (2) lesdits moyens de protection (19) coopérant avec lesdits moyens de positionnement (11) et autorisant l'accès visuel à ladite machine afin de l'inspecter en fonctionnement ou à l'arrêt, tout en déportant l'accès manuel à ladite machine d'une distance de sécurité D afin d'interdire à un opérateur d'insérer un de ses membres au niveau de l'ouverture de trappe.

8. Procédé selon la revendication 7, dans lequel lesdits moyens de protection (19) se présentent sous la forme d'un caisson, une première face latérale (23) du caisson présentant un évidement (28) complémentaire de la griffe de positionnement (13) restante et avec laquelle ledit évidement (28) coopère pour reconstituer une face pleine.

9. Procédé selon la revendication 9, dans lequel le caisson comporte un fond au moins en partie grillagé (20), une ouverture (21) en regard dudit fond, destinée à coopérer avec l'ouverture de trappe (2), le caisson comportant également des moyens de fermeture (3) de l'ouverture de trappe et des moyens de commande (6) desdits moyens de fermeture.

10. Procédé selon la revendication 9, dans lequel lesdites moyens de commande (6) se présentent sous la forme d'un palonnier (7) à vis (8) que l'on fixe au caisson par une extrémité (16), l'autre extrémité (15) du palonnier étant libre et dépassant du caisson au niveau dudit évidemment (28), et dans lequel cette extrémité libre (15) coopère avec la griffe de positionnement (13) pour assujettir le caisson à la trappe de façon amovible.

11. Procédé selon l'une des revendications 8, 9 ou 10, dans lequel au moins une seconde face latérale (24, 26) du caisson présente une fente (27) au voisinage de l'ouverture (21) du caisson pour insérer et retirer lesdits moyens de fermeture (3).

## Claims

1. A machine exhibiting an internal compartment including a member, in particular an engine compartment, and including an inspection flap, which provides access to said member of the machine via the opening of said flap for inspecting said member, said inspection flap including closing means (3) of said flap opening, control means (6) of said closing means and positioning means (11) on the flap opening (2), **characterised in that** the inspection flap is fitted with protective means (19) operating relative to said flap opening (2) to enable visual access to said machine in order to inspect it in use or when stopped, while moving manual access to said machine by a safety distance D so as to prevent any operator from inserting one of his limbs at the flap opening.

2. A machine according to claim 1, wherein said protective means are slaved removably to the flap opening, at said positioning means (11).

3. A machine according to claim 1 or 2, wherein said protective means are in the form of a caisson with a bottom (20) at least partially screened, an opening (21) facing said bottom, whereof the periphery (22) co-operates at least partially with said positioning means (11), said opening (21) of the caisson being situated at a safety distance D from the bottom of the caisson, said caisson comprising moreover lateral faces (23-26) connecting the bottom (20) and the opening (21) of the caisson.

4. A machine according to any of the claims 1, 2 or 3, wherein the closing means (3) are in the form of a removable plate (4) fitted with a gasket (5) and wherein the control means consist of a screw (8) type joystick (7), said positioning means (11) being sandwiched between the lips (22) of the opening of the caisson and said closing means (3).

5. A machine according to claim 4, wherein:
- a first lateral face (23) of the caisson exhibits a recess (28) in the extension of the opening (21) of the caisson,
- a free end (15) of the joystick (7) protrudes from the caisson at of said recess (28), the other end (16) being fixed to the caisson,
- the positioning means (11) include a claw (13) which is complementary to said recess (28) for reconstructing a full face, co-operating with the free end (15) of the joystick (7) for locating and slaving the caisson to the flap removably.

6. A machine according to claim 4, wherein at least one second lateral face (24, 26) of the protective caisson exhibits a slot27) in the vicinity of the opening (21) of the caisson for inserting and removing said closing means (3).

7. A method for improving the safety of a inspection flap capable of providing access to a machine, in particular for inspecting an engine member, said inspection flap exhibiting a flap opening (2), a removable plate (4) for closing the flap, a screw (8) type joystick (7) resting on positioning means (11) among which two parallel positioning claws (13), said screw type joystick enabling to apply a thrust on the removable plate so as to close the flap tightly and a counter-thrust at of said claws, **characterised in that** :
- the plate and the screw type joystick are removed,
- one of the positioning claws (13) is cut so as to leave only one lip (30),
- protective means (19) are installed on said flap opening (2) said protective means (19) co-operating with said positioning means (11) and enabling visual access to said machine in order to inspect it in use or when stopped, while moving manual access to said machine by a safety distance D so as to prevent any operator from inserting one of his limbs at the flap opening.

8. A method according to claim 7, wherein said protective means (19) are in the form of a caisson, a first lateral face (23) of the caisson exhibiting a recess (28) which is complementary to the positioning claw (13) remaining and with which said recess (28) co-operates for reconstructing a full face.

9. A method according to claim 9, wherein the caisson includes a bottom which is at least partially screened (20), an opening (21) facing said bottom, intended for co-operating with the flap opening (2), the caisson also comprising closing means (3), flap opening means and means for controlling (6) of said closing means.

10. A method according to claim 9, wherein said control means (6) are in the form of a screw (8) type joystick (7) that is fixed to the caisson at one end (16), the other end (15) of the joystick being free and protruding from the caisson at of said recess (28), and wherein this free end (15) co-operates with the positioning claw (13) for slaving the caisson to the flap removably.

11. A method according to any of the claims 8, 9 or 10, wherein at least one second lateral face (24, 26) of the caisson exhibits a slot (27) in the vicinity of the opening (21) of the caisson for inserting and removing said closing means (3).

## Patentansprüche

1. Maschine, aufweisend einen inneren Bereich, der insbesondere ein Antriebsorgan umfasst, und umfassend eine Zugangsklappe, die den Zugang zu dem besagten Organ der Maschine über die Öffnung der besagten Klappe zwecks Sichtprüfung des Organs erlaubt, wobei die besagte Zugangsklappe Mittel zur Schließung (3) der besagten Öffnung der Klappe, Mittel zum Steuern (6) der besagten Schließungsmittel und Mittel zur Positionierung (11) an der Öffnung (2) der Klappe umfasst, **dadurch gekennzeichnet, daß** die Zugangsklappe mit Schutzmitteln (19) ausgestattet ist, die hinsichtlich der besagten Öffnung der Klappe (2) wirken, um den visuellen Zugriff zu der besagten Maschine zu erlauben, um sie im Betrieb oder Stillstand zu kontrollieren, während der manuelle Zugriff zu der besagten Maschine in eine Sicherheitsentfernung D versetzt wird, um einem Bediener es zu verwehren, eine seiner Gliedmaßen in den Bereich der Öffnung der Klappe einzustecken.

2. Maschine nach Anspruch 1, bei der die besagten Schutzmittel auf abnehmbare Art und Weise an der Öffnung der Klappe im Bereich der besagten Positionierungsmittel (11) befestigt sind.

3. Maschine nach Anspruch 1 oder 2, bei der die besagten Schutzmittel als ein Kasten mit einem wenigstens teilweise vergitterten Boden (20) ausgestaltet sind, wobei eine dem besagten Boden gegenüberliegende Öffnung (21), deren Randbereich (22) wenigstens teilweise mit den besagten Positionierungsmitteln (11) zusammenwirkt, wobei die besagte Öffnung (21) des Kastens in einer Sicherheitsdistanz D vom Boden des Kastens entfernt angeordnet sei, wobei der besagte Kastgen außerdem seitliche Flächen (23-26) umfaßt, die den Boden (20) und die Öffnung (21) des Kastens verbinden.

4. Maschine nach einem der Ansprüche 1, 2 oder 3, bei der die Schließungsmittel (3) als eine abnehmbare, mit einer Dichtung (5) ausgestattete Platte (4) ausgestaltet sind, und bei der die Steuermittel aus einem Steuerhebel (7) mit Schraube (8) bestehen, wobei sich die besagten Positionierungsmittel (11) eingefügt zwischen den Überstülpungen (22) der Öffnung des Kastens und den besagten Schließungsmitteln (3) befinden.

5. Maschine nach Anspruch 4, bei der:
- eine erste seitliche Fläche (23) des Kastens im Kontinuum von Öffnung (21) des Kastens eine Aushöhlung (28) aufweist.
- ein freies Ende (15) des Steuerhebels (7) im Bereich der besagten Öffnung (28) über den Kasten hinaus gelangt, wobei das andere Ende (16) am Kasten befestigt sei,
- die Positionierungsmittel (11) einen die besagte Aushöhlung (28) ergänzenden Greifer (13) umfassen, um eine Vollfläche wieder herzustellen, die mit dem freien Ende (15) des Steuerhebels (7) zusammenwirkt, um den Kasten zu positionieren und ihn auf abnehmbare Art und Weise an der Klappe zu befestigen.

6. Maschine nach Anspruch 4, bei der wenigstens eine zweite seitliche Fläche (24, 26) des Schutzkastens einen Spalt (27) nahe bei der Öffnung (21) des Kastens aufweist, um die besagten Schließungsmittel (3) einzufügen und herauszuziehen.

7. Verfahren, um die Sicherheit einer Zugangsklappe zu verbessern, die geeignet ist, um den Zugang zu einer Maschine insbesondere für die Sichtkontrolle eines Antriebsorgans zu verschaffen, wobei die besagte Zugangsklappe eine Klappenöffnung (2), eine abnehmbare Platte (4) für die Schließung der Klappe, einen Steuerhebel (7) mit Schraube (8) aufweist, der sich auf die Positionierungsmittel (11) aufstützt, worunter zwei parallel verlaufende Positionierungsgreifer (13), wobei der besagte Steuerhebel mit Schraube erlaubt, auf die abnehmbare Platte einen Druck auszuüben, um die Klappe wasserdicht zu schließen, und im Bereich der besagten Greifer einen Gegendruck auszuüben, **dadurch gekennzeichnet, dass**:
- die Platte und der Steuerhebel mit Schraube herausgezogen werden,
- der eine von den Positionierungsgreifern (13) beseitigt wird, derart, um nur eine Überstülpung (30) zu lassen,
- Schutzmittel (19) auf der besagten Klappenöffnung der (2) installiert werden, wobei die besagten Schutzmittel (19) mit den besagten Positionierungsmitteln (11) zusammenwirken und den visuellen Zugriff zu der besagten Maschine erlauben, um sie im Betrieb oder Stillstand zu kontrollieren, während der manuelle Zugriff zu der besagten Maschine in eine Sicherheitsentfernung D versetzt wird, um einem Bediener es zu verwehren, eine seiner Gliedmaßen in den Bereich der Klappenöffnung einzustecken.

8. Verfahren nach Anspruch 7, bei dem die besagten Schutzmittel (19) als ein Kasten ausgestaltet sind, wobei eine erste seitliche Fläche (23) des Kastens eine ergänzende Aushöhlung (28) zu dem verbleibenden Positionierungsgreifer (13) aufweist, und mit dem die besagte Aushöhlung (28) zusammenwirkt, um eine Vollfläche wieder herzustellen.

9. Verfahren nach Anspruch 9, bei dem der Kasten einen wenigstens teilweise vergitterten Boden (20) sowie eine dem besagten Boden gegenüberliegende Öffnung (21) umfasst, die vorgesehen ist, um mit der Klappenöffnung (2) zusammenzuwirken, wobei der Kasten ebenfalls Mittel zur Schließung (3) der Klappenöffnung und Mittel zum Steuern (6) der besagten Schließungsmittel umfasst.

10. Verfahren nach Anspruch 9, bei dem die besagten Steuermittel (6) als ein Steuerhebel (7) mit Schraube (8) ausgestaltet sind, der mit einem Ende (16) am Kasten befestigt wird, wobei das andere Ende (15) des Steuerhebels frei sei und über den Kasten im Bereich der besagten Aushöhlung (28) hinausgelangt, und bei dem dieses freie Ende (15) mit dem Positionierungsgreifer (13) zusammenwirkt, um den Kasten auf abnehmbare Art und Weise mit der Klappe zu verbinden.

11. Verfahren nach irgendeinem der Ansprüche 8, 9 oder 10, bei dem wenigstens eine zweite seitliche Fläche (24, 26) des Kastens einen Spalt (27) nahe bei der Öffnung (21) des Kastens aufweist, um die besagten Schließungsmittel (3) einzufügen und herauszuziehen.
